# EUROPÄISCHE PATENTSCHRIFT

(11) **EP 1 675 476 B1**
(45) Veröffentlichungstag und Bekanntmachung des Hinweises auf die Patenterteilung: **18.05.2011**
(21) Anmeldenummer: 04790162.4
(22) Anmeldetag: 07.10.2004
(51) Int. Cl.: A23L 1/236, A23L 1/212

(54) **SÜSSSTOFFKOMBINATION ZUR SÜSSUNG VON OBSTKONSERVEN**
SWEETENING AGENT COMBINATION USED FOR SWEETENING PRESERVED FRUITS
COMBINAISON D'EDULCORANTS POUR SUCRER DES CONSERVES DE FRUITS

(30) Priorität: 16.10.2003 DE 10348723
(43) Veröffentlichungstag der Anmeldung: 05.07.2006
(73) Patentinhaber: Nutrinova Nutrition Specialties & Food Ingredients GmbH, 61476 Kronberg im Taunus (DE)
(72) Erfinder: SÄLZER, Katrin, 63538 Grosskrotzenburg (DE)
(86) Internationale Anmeldenummer: PCT/EP2004/011185
(87) Internationale Veröffentlichungsnummer: WO 2005/036986

(56) Entgegenhaltungen:
- EP-A- 0 396 165
- WO-A-02/41705
- DE-A- 19 732 351
- US-A- 4 495 170
- US-A- 5 397 588
- MENDONCA C R ET AL: "Partial substitution of sugars by the low-calorie sweetener sucralose in peach compote" JOURNAL OF FOOD SCIENCE, Bd. 66, Nr. 8, Oktober 2001 (2001-10), Seiten 1195-1200, XP009041179 ISSN: 0022-1147
- HANGER L Y ET AL: "DESCRIPTIVE PROFILES OF SELECTED HIGH INTENSITY SWEETENERS (HIS), HIS BLENDS, AND SUCROSE" JOURNAL OF FOOD SCIENCE, INSTITUTE OF FOOD TECHNOLOGISTS. CHICAGO, US, Bd. 61, Nr. 2, 1996, Seiten 456-458,464, XP001007791 ISSN: 0022-1147
- PATENT ABSTRACTS OF JAPAN Bd. 2002, Nr. 04, 4. August 2002 (2002-08-04) -& JP 2001 333729 A (SANEI GEN FFI INC), 4. Dezember 2001 (2001-12-04)
- PATENT ABSTRACTS OF JAPAN Bd. 2002, Nr. 08, 5. August 2002 (2002-08-05) -& JP 2002 101844 A (SANEI GEN FFI INC), 9. April 2002 (2002-04-09)

## Beschreibung

Die Erfindung betrifft eine Süßstoffkombination aus Acesulfam-K und Sucralose im Gewichtsverhältnis von mindestens 75/25 zur Süßung von Obstkonserven. Weiterhin betrifft die Erfindung ein Verfahren zum mindestens teilweisen Ersatz von Saccharose (Zucker) in Obstkonserven.

Auf dem Markt befindliche Obstkonserven enthalten üblicherweise zwischen 10 und 25 Gew.-% Zucker, teilweise können auch höhere Konzentrationen bis über 30 Gew.-% erreicht werden. Der Zucker in Obstkonserven dient in erster Linie der Süßung, aber auch einer Verbesserung des Aromas und der Fruchtigkeit.

Auf Grund des gestiegenen Gesundheitsbewusstseins des Konsumenten, was sich auch in seiner Ernährung widerspiegelt, geht das Bestreben einerseits in Richtung eines erhöhten Obst- und Gemüsekonsums, andererseits in Richtung einer verringerten Aufnahme von zugesetztem Zucker zur Reduktion der Kalorienaufnahme.

Der teilweise sehr hohe Zuckergehalt von Obst in Konserven wird daher vom Konsumenten als nachteilig empfunden, was sich negativ auf den Verbrauch und somit den Absatz solcher Produkte auswirkt.

Neben dem hohen ernährungsphysiologischen Nutzen der Obstkonserven steht für den Endverbraucher immer auch der gute Geschmack im Vordergrund. Ein Produkt, was nicht die geschmacklichen Erwartungen des Konsumenten erfüllt, wird ebenfalls nicht akzeptiert werden. Weitere Entscheidungskriterien sind die leichte Handhabung und ausreichende Lagerstabilität der Produkte. Diese beträgt bei handelsüblichen Obstkonserven etwa 3-4 Jahre.

Der Markt für zuckerfreie, somit kalorienreduzierte Obstkonserven ist bisher sehr begrenzt, da entweder die geschmackliche Qualität oder die Lagerstabilität im Endprodukt nicht den Anforderungen des Konsumenten entspricht.

Als Süßstoffe für Obstkonserven werden bisher Saccharin und Cyclamat als Einzelsüßstoff oder in Kombination eingesetzt, wobei beide Systeme nicht den geschmacklichen Anforderungen der Verbraucher hinsichtlich Intensität der Süße sowie Qualität des Süßeprofils und der Fruchtigkeit entsprechen. Auch eine Mischung aus Acesulfam K und Aspartam wird für die Herstellung von Obstkonserven genutzt, jedoch ist keine ausreichend dauerhafte Lagerstabilität der Süße gegeben.

Von C.A. West [US-A 2,536,970] wurde 1951 die Verringerung des unerwünschten Bei- und Nachgeschmacks mit Saccharin gesüßter Obstkonserven durch Kombinatio nen mit Pectin beschrieben. H.W. Walker [US-A 2,608,489] führte 1952 aus, dass eine Geschmacksverbesserung der süßen Obstprodukte durch Kombination von Saccharin mit dem Zuckeralkohol Sorbitol und/oder Carboxymethylcellulose möglich ist. Dabei dient Sorbitol einer Verbesserung des Süßgeschmacks, Carboxymethylcellulose soll zur Optimierung des Mundgefühls beitragen.

Keine dieser Möglichkeiten fand im heutigen Markt für Obstkonserven tatsächlich Anwendung, da die geschmacklichen Qualitäten solcher Produkte offensichtlich nicht die Verbrauchererwartung treffen. Auch J.B. Gordon [US-A 2,629,655] stellte bei den beschriebenen Mischungen aus Saccharin mit Pectin oder Sorbitol nach wie vor einen metallischen Beigeschmack fest, der den Gesamteindruck des Produktes negativ beeinflusst. Als Alternative wird eine Mischung aus Saccharin und Cyclamat zur Süßung von Obstkonserven vorgeschlagen, die in Bezug auf die Süße näher an dem Standard Zucker liegt als Obstkonserven mit Saccharin oder einer der bereits beschriebenen Mischungen.

Anderson et al. [Journal of the American Dietetic Association, August 1953 (29), 770-773] beschreibt jedoch Unterschiede zwischen Obstkonserven gesüßt mit Mischungen aus Saccharin und/oder Cyclamat im Vergleich zu Zucker und Obst in wässriger Lösung. Für nahezu alle Fruchtarten wie zum Beispiel Himbeeren, Süßkirschen, Birnen oder Rhabarber wurden die gezuckerten Muster bevorzugt. Alle zuckerfreien Süßungssysteme werden lediglich gegenüber Obst in Wasser bevorzugt.

Aus verschiedenen, neueren Untersuchungen in zuckerfreien und zucker-reduzierten Getränken ist bekannt, dass einige Süßungssysteme einen besonders zuckerähnlichen Süßgeschmack besitzen und bestimmte Aromen besonders zur Geltung bringen [Meyer, The World of Food Ingredients, December 2000, 42-44], [Meyer, Soft Drinks International, September 2001]. Dabei hatte sich gezeigt, dass vor allem Kombinationen aus Acesulfam K und Aspartam in Mischungsverhältnissen von 30/70 bis 50/50 sehr gute Ergebnisse in Bezug auf die Qualität der Süße und Unterstützung des Aromas ergeben.

Für Obstkonserven, welche mit Aspartam alleine oder im Blend mit z. B. Acesulfam K gesüßt werden, ist jedoch nur eine Haltbarkeit von 12 bis 18 Monaten möglich [G. Frei, Nutrasweet^{®} and heat processing - product opportunities, 1990, anon., 155-160], üblicherweise sollte die Haltbarkeit dieser Produkte jedoch 3-4 Jahre betragen. Für die Anwendung in Obstkonserven ist die Stabilität der Süße aspartamhaltiger Mischungen nach Erhitzung und Lagerung über mehrere Jahre daher nicht ausreichend.

Mendonca et al. [Journal of Food Science, Vol 66. No.8, 2001, S.1195-1200] beschreiben den teilweisen Ersatz von Zucker in Pfirsich-Konserven durch Sucralose, Acesulfam K oder durch eine Mischung von Sucralose und Acesulfam K im Gewichtsverhältnis ~ 32:68. Die Stabilität und die sensorischen Eigenschaften wurden bis zu 90 Tagen nach Produktion bewertet. Die Sucralose/Acesulfam K-Mischung und Acesulfam-K alleine weisen einen metallischen Nachgeschmack auf. Die Sucralose-Konserve wurde vevorzugt.

Von den Süßstoffen Acesulfam K und auch Sucralose ist hingegen bekannt, dass sie unter den vorgenannten Temperaturbedingungen stabil sind [Alternative Sweeteners, Lyn O'Brien Nabors, Robert C. Gelardi, Calorie Control Council Atlanta, 2nd Edition, 1991 178-189].

Weiterhin ist aus oben genannten Untersuchungen bekannt, dass auch Mischungen von Acesulfam K und Sucralose in Getränken in Süße-Verhältnissen von etwa 20/80 oder 30/70 - was einem Gewichtsanteil von 45/65 oder 55/45 entspricht - eine sehr zuckerähnliche Süße besitzen und ein angenehmeres Süßeprofil als zum Beispiel Kombinationen in dem Süßeverhältnis Acesulfam K /Sucralose um 50/50 ergeben, das entspricht dem Gewichtsverhältnis von 75/25. Andere Empfehlungen [Splenda Inc. 2001, Splenda^{®} Brand Sweetener in soft drinks, product booklet] geben als optimal schmeckende Blendverhältnisse für Acesulfam K und Sucralose in Getränken und Lebensmitteln Mischungen an, in denen der Gewichtsanteil der Sucralose in der Mischung hoch ist, d. h. das Verhältnis der beiden Süßstoffe zueinander in Richtung Sucralose verschoben ist.

Vergleichbare Konzepte für Obstkonserven, die darüber hinaus den hohen Lagerzeiten von Obstkonserven genügen, sind hingegen unbekannt.

Aufgabe der vorliegenden Erfindung ist es somit, ein Süßstoffkonzept zur Verfügung zu stellen, welches alle der folgenden Bedingungen erfüllt:
1) Zuckerreduktion und damit Kalorienreduktion im Vergleich zu handelsüblich gezuckerten Obstkonserven,
2) Stabilität der Süße auch nach Erhitzung und Lagerung der Konserve über mehrere Jahre.
3) Geschmacksverbesserung bisheriger zuckerfreier Obstkonserven in Richtung einer sehr zuckerähnlichen Süße und guter Unterstützung des Fruchtaromas.

Gelöst wird diese Aufgabe durch die Verwendung von Acesulfam K in Kombination mit Sucralose zur Süßung zuckerreduzierter oder zuckerfreier Obstkonserven.

So wurde überraschenderweise gefunden, dass in Obstkonserven Mischungen aus Acesulfam K und Sucralose vor allem im Süße-Verhältnis von mindestens 50/50 - das entspricht Gewichtsverhältnissen von Acesulfam K zu Sucralose von mindestens 75/25 - ein bevorzugtes Süßeprofil ergeben. Dies ist insofern besonders überraschend, als bei bisherigen zuckerfreien Getränken und Lebensmitteln immer Mischungen von Acesulfam K und Sucralose mit hohem Sucraloseanteil (über 50 % Süßeanteil bzw. über 25 Gew.-%) einen besonders zuckerähnlichen Süßgeschmack hervorrufen. In Obstkonserven werden jedoch besser schmeckende Produkte erhalten, wenn die geläufigen Verhältnisse umgekehrt werden und der Süßebeitrag von Acesulfam K in der Süßstoffmischung überwiegt.

Weiterhin wurde festgestellt, dass Obstkonserven, welche mit erfindungsgemäßen Mischungen aus Acesulfam K und Sucralose gesüßt werden, auf Grund der angenehmeren Süße und des volleren Fruchtaromas gegenüber bisher üblichen mit Saccharin und Cyclamat gesüßten Obstkonserven bevorzugt werden.

Die erfindungsgemäße Verwendung von Süßstoffmischungen kann z. B. in der Form angewandt werden, dass die Süßstoffe oder die Süßstoffmischung direkt zur Konserve gegeben werden oder indem Lösungen der Süßstoffe oder Süßstoffmischung als Aufgussflüssigkeit für die Konserve verwendet werden. Diese Aufgussflüssigkeit kann auch in konzentrierter Form vorliegen und durch zusätzliche Zugabe von Wasser entsprechend verdünnt werden.

Alternativ zum erfindungsgemäßen Süßstoff Acesulfam K können andere Salze der Acesulfamsäure sowie auch die freie Säure selbst eingesetzt werden. Eine mögliche Herstellung von Acesulfam K ist beispielsweise das sogenannte SO₃-Verfahren, wie es in der EP-A-0 155 634 beschrieben ist. Durch Variation der Neutralisationsbase können verschiedene Acesulfam-Salze hergestellt werden.

Als Obstsorten kommen alle zu Konserven verarbeitbaren Sorten in Frage wie zum Beispiel Birnen, Pfirsiche, Kirschen, aber auch Zitrusfrüchte, unter anderem Mandarinen, Orangen, auch tropische Früchte wie Ananas, Mango, Litschi sowie verschiedene Beeren. Die Obstsorten können einzeln oder auch in Kombination als Fruchtcocktail oder Früchtemischung eingesetzt werden.

Die Verarbeitungsbedingungen der Obstkonserve entsprechen den für vergleichbare gezuckerte Produkte üblichen Herstellungsverfahren. Das beinhaltet zunächst ein Waschen und gegebenenfalls Zerkleinern der Früchte, anschließend die Zugabe der gesüßten Aufgusslösung. Dann wird üblicherweise in der verschlossenen Verpackung, welche aus Glas, Metall oder Kunststoff bestehen kann, erhitzt, um die Haltbarkeit des Obstes sicherzustellen. Die dazu benötigten Temperaturen und Erhitzungszeiten können je nach Größe und Verpackung sowie verwendeten Verfahren in weiten Grenzen variieren.

Erfindungsgemäß werden die Süßstoffe in Obstkonserven zweckmäßig in Mischungsverhältnissen von Acesulfam K/Sucralose in Mengen von 75/25 Gew.-% bis zu 95/5 Gew.-% und insbesondere bevorzugt in Mengen von 80/20 Gew.-% bis zu 90/10 Gew.-% (jeweils immer bezogen auf die Gesamtmasse der Süßstoffmischung) eingesetzt.

Als Mengenanteil der erfindungsgemäßen Mischung an der Einwaage der gesamten Obstkonserve wird je nach gewünschter Süßintensität im Endprodukt bevorzugt 0,005 Gew.-% bis 0,1 Gew.-% eingesetzt, besonders bevorzugt 0,015 Gew.-% bis 0,065 Gew.-%.

Weiterhin können in erfindungsgemäßen Obstkonserven neben hochintensiven Süßstoffen auch verschiedene Zuckerarten (kalorische Süßstoffe) wie zum Beispiel Saccharose, Glucose, Fruktose in unterschiedlichen Mengen vorhanden sein. Da der natürliche Zuckergehalt in Obstkonserven abhängig ist von dem Mischungsverhältnis des Obstes zur Aufgusslösung und auch dem Zuckergehalt der Früchte, der je nach Fruchtart, Saison oder Region des Anbaus großen Schwankungen unterliegt, kann der Gehalt an kalorischen Süßstoffen in weiten Grenzen variieren. Auch zugesetzter Zucker kann neben den hochintensiven Süßstoffen enthalten sein.

Darüber hinaus können geringe Anteile anderer Süßstoffe wie z. B. Cyclamat, Saccharin, NHDC oder andere zur Geschmacksabrundung und Verstärkung eines bestimmten Aromaeindrucks bei besonderen Fruchtarten oder Früchtemischungen eingesetzt werden. Die benötigten Mengen dieser Stoffe liegen im Bereich von bis zu 0,06 Gew.-%, bezogen auf das gesamte Endprodukt je nach Geschmacksintensität der zugesetzten Substanz.

Ebenfalls können weitere Zutaten wie z. B. Säuren (u. a. Citronensäure zur pH-Wert-Einstellung, Antioxidantien (wie Ascorbinsäure) zur Verhinderung von Bräunungsreaktionen, Verdicker zur Anpassung der Viskosität der Aufgusslösung oder auch Farbstoffe oder Aromastoffe zur Obstkonserve in dem Fachmann bekannten Konzentrationen zugesetzt sein. Je nach Zusatzstoff und Zweck kann die übliche Einsatzkonzentration um 0,01 bis 1 Gew.-% im gesamten Produkt schwanken.

Die Erfindung betrifft weiterhin eine Verfahren zum teilweise oder vollständigen Zuckerersatz in Obstkonserven. Hierbei wird ein Teil bis hin zur Gesamtmenge des üblicherweise zugesetzten Zuckers in der Obstkonserve ersetzt durch die erfindungsgemäße Acesulfam K/Sucralose-Mischung.

Im Folgenden wird die Erfindung anhand von Beispielen näher erläutert.

### Vergleichsbeispiel

### Birnenkonserven mit unterschiedlichen Acesulfam K/Sucralose-Verhältnissen

Es wurden Birnenkonserven hergestellt gemäß den in Tabelle 1 angegebenen Rezepturen. Dazu wurden die Birnen zunächst geschält, zerkleinert und zur Verhinderung der Bräunung mit Ascorbinsäurelösung (0,5 Gew.-%) behandelt. Das Obst wurde mit 90 °C heißer Aufgusslösung übergossen und anschließend im verschlossenen Behältnis weitere 10 min auf 90 °C erhitzt. Nach dem Abkühlen wurden die Obstkonserven bei Raumtemperatur (keine kontrollierten Bedingungen) über mehrere Wochen gelagert, danach von erfahrenen Panellisten sensorisch beschrieben.

**Tabelle 1**

| | **Mischungsverhältnisse Acesulfam K zu Sucralose (Süßeverteilung)** | | **Zucker** |
|---|---|---|---|
| | **20/80** | **50/50** | |
| **Birnen** | 100 g | 100 g | 100 g |
| **Aufgusslösung bestehend aus:** | 100 ml | 100 ml | 100 ml |
| **Acesulfam K** | 0,02 g/100 ml | 0,05 g/100 ml | - |
| **Sucralose** | 0,032 g/100 ml | 0,02 g/100 ml | - |
| **Zucker** | - | - | 27 g/100 ml |
| **Ascorbinsäure** | 0,1 g/100 ml | 0,1 g/100 ml | 0,1 g/100 ml |
| **Beschreibung des Geschmacks** | wenig nach Birne, Süß-intensität entspricht dem Vergleich Zucker, jedoch lang anhaltende Süße, lakritziger, süßer Nach-geschmack | wenig Birnenaroma, Süßintensität ok, lang anhaltend süßer Nachgeschmack | süße Birne, runde, volle Süße |

(Anmerkung: Analytisch nachweisbare Konzentrationen an zugesetzten Süßungsmitteln im Endprodukt sind deutlich geringer, da ein vollständiger Konzentrationsausgleich zwischen Obst und Lösung stattfindet. In der Tabelle sind Konzentrationen der Süßungsmittel in Bezug auf die Aufgusslösung angegeben)

Wie die Ergebnisse zeigen, konnte keine der getesteten Rezepturen die geschmacklichen Qualitäten von Zucker vollständig erreichen. Das Süßeprofil weicht von Zucker ab, dadurch wird auch die Ausprägung des Fruchtaromas nachteilig beeinflusst.

### Beispiel 1

Es wurden Birnenkonserven in analoger Weise zum Vergleichsbeispiel hergestellt, wobei jedoch die Rezepturen gemäß Tabelle 2 eingesetzt wurden.

**Tabelle 2**

| | **Mischungsverhältnisse Acesulfam K zu Sucralose (Süßeverteilung)** | | **Zucker** |
|---|---|---|---|
| | **80/20** | **90/10** | |
| **Birnen** | 100 g | 100 g | 100 g |
| **Aufgusslösung bestehend aus:** | 100 ml | 100 ml | 100 ml |
| **Acesulfam K** | 0,066 g/100 ml | 0,0743 g/100 ml | - |
| **Sucralose** | 0,007 g/100 ml | 0,0035 g/100 ml | - |
| **Zucker** | - | - | 17 g/100 ml |
| **Ascorbinsäure** | 0,1 g/100 ml | 0,1 g/100 ml | 0,1 g/100 ml |
| **Beschreibung des Geschmacks** | Birnenaroma typisch, gleiche Süßintensität, Süßeeinsatz wie Zucker, anhaltende Süße | Birnenaroma typisch schneller Einsatz der Süße, sehr zuckerähnlich, kein Beigeschmack | typisch für Birne, runde Süße, angenehme Süßintensität |

Wie zu erkennen ist, wurden mit den neuen Mischungsverhältnissen überraschend bessere Ergebnisse erzielt. Das Süßeprofil der Mischungen 80/20 und 90/10 entsprach dem Süßeprofil des Zuckers. Auch in Bezug auf die Fruchtigkeit entsprechen beide zuckerfreien Varianten der gezuckerten.

### Beispiel 2

### Birnenkonserven gesüßt mit Acesulfam K und Sucralose sind nicht mehr von Zucker zu unterscheiden

Analog dem Vergleichsbeispiel wurden Birnenkonserven hergestellt, Tabelle 3 gibt die verwendeten Konzentrationen wieder.

**Tabelle 3**

| | **Acesulfam K/Sucralose 80/20 (Süßeverhättnis)** | **Zucker** |
|---|---|---|
| **Birnen** | 100 g | 100 g |
| **Aufgusslösung bestehend aus:** | 100 ml | 100 ml |
| **Acesulfam K** | 0,066 g/100 ml | - |
| **Sucralose** | 0,007 g/100 ml | - |
| **Zucker** | - | 17 g/100 ml |
| **Ascorbinsäure** | 0,1 g/100 ml | 0,1 g/100 ml |

Diese Proben wurden in einem Triangeltest von 12 Personen geprüft. Dabei wurden jedem Tester verschlüsselt und in zufälliger Reihenfolge drei Proben serviert, von denen zwei gleich und eine abweichend war. Die abweichende Probe sollte identifiziert werden. Lediglich 4 der 12 Tester haben die abweichende Probe korrekt angegeben. Statistisch stellt das keinen signifikanten Unterschied dar, da die Wahrscheinlichkeit, dass ein solches Ergebnis durch Raten erhalten wurde, bei nahezu 93 % liegt. Die Proben konnten also nicht voneinander unterschieden werden.

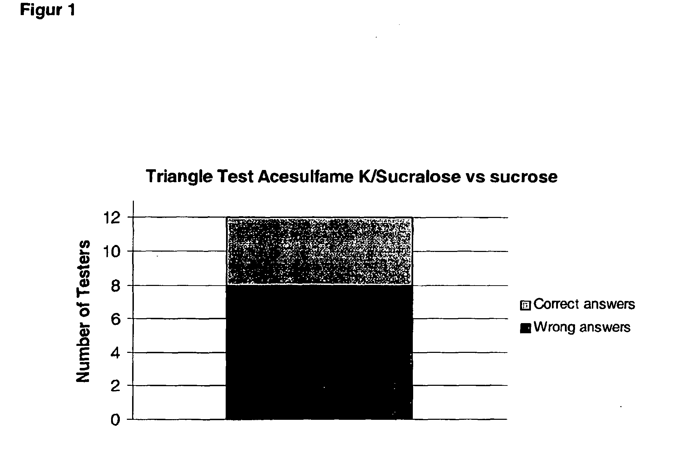

Figur 1 veranschaulicht die Ergebnisse.

### Beispiel 3

### Birnenkonserven mit Acesulfam K und Sucralose werden gegenüber vergleichbaren Produkten mit Saccharin/Cyclamat bevorzugt

Analog dem Vergleichsbeispiel wurden Birnenkonserven hergestellt und verkostet, Tabelle 4 gibt die verwendeten Konzentrationen wieder.

**Tabelle 4**

| | **Acesulfam K/Sucralose 80/20 (Süßeverhältnis)** | **Saccharin/Cyclamat** |
|---|---|---|
| **Birnen** | 100 g | 100 g |
| **Aufgusslösung bestehend aus:** | 100 ml | 100 ml |
| **Acesulfam K** | 0,066 g/100 ml | - |
| **Saccharin** | - | 0,012 g/100 ml |
| **Sucralose** | 0,007 g/100 ml | - |
| **Cyclamat** | - | 0,112 g/100 ml |
| **Ascorbinsäure** | 0,1 g/100 ml | 0,1 g/100 ml |
| **Beschreibung des Geschmacks** | Birnenaroma deutlich, gleiche Süßintensität, Süßeeinsatz wie Zucker, anhaltende Süße, kein Beigeschmack | flaches Aroma spät einsetzende Süße, metallischer Beigeschmack, bitterer Nachgeschmack |

### Schlussfolgerung

Mit der erfindungsgemäßen Süßstoffkombination können verschiedene Verbrauchererwartungen deutlich besser als bisher erfüllt werden. Das sind im Einzelnen:
- kein Zuckerzusatz nötig, damit reduzierte Kalorien der Obstkonserven;
- vor allem sehr guter Geschmack in Bezug auf Süße und Fruchtaroma;
- lange Lagerstabilität, gleich bleibender Geschmack über die gesamte Lagerperiode.

## Patentansprüche

1. Obstkonserve, enthaltend Obst und eine Süßstoffmischung bestehend aus Acesulfam K und Sucralose im Gewichtsverhälltnis >= 75/25 bis 95/5.

2. Obstkonserve nach Anspruch 1, die zusätzlich einen oder mehrere folgender Süßstoffe enthält: Cyclamat, Saccharin und NHDC.

3. Obstkonserve nach Anspruch 1 oder 2, wobei der Mengenanteil der Süßstoffmischung an der Einwaage der gesamten Obstkonserve 0,005 Gew.-% bis 0,1 Gew.-% beträgt.

4. Obstkonserve nach einem der Ansprüche 1 bis 3, wobei sich das Obst in einem Container aus Metall, Glas oder Kunststoff befindet.

5. Obstkonserve nach einem der Ansprüche 1 bis 4, wobei das Obst ausgewählt ist aus einer oder mehreren Fruchtarten aus der Gruppe Kern-, Stein-, Beerenobst, tropische Früchte, Zitrusfrüchte oder Wildfrüchte, beispielsweise Ananas, Apfel, Birne, Pfirsich, Mandarine oder Kirsche.

6. Verfahren zur Süßung von Obstkonserven, **dadurch gekennzeichnet, dass** eine Süßstoffmischung bestehend aus Acesulfam K und Sucralose im Gewichtsverhälltnis >= 75/25 bis 95/5 eingesetzt wird.

7. Verfahren zur Reduzierung des Zuckergehalts in Obstkonserven, **dadurch gekennzeichnet, dass** man einen Teil des Zuckers oder den gesamten Zucker, der der Obstkonserve zugesetzt wird, ersetzt durch eine Süßstoffmischung bestehend aus Acesulfam K und Sucralose im Gewichtsverhälltnis >= 75/25 bis 95/5.

8. Verwendung einer Süßstoffmischung bestehend aus Acesulfam K und Sucralose im Gewichtsverhälltnis >= 75/25 bis 95/5 zur Süßung von Obstkonserven.

## Claims

1. Preserved fruit comprising fruit and a sweetener mixture consisting of acesulfame-K and sucralose in the weight ratio ≥ 75/25 to 95/5.

2. Preserved fruit according to Claim 1 which additionally comprises one or more of the following sweeteners: cyclamate, saccharin and NHDC.

3. Preserved fruit according to Claim 1 or 2, wherein the weight fraction of the sweetener mixture of the weight of the total preserved fruit is 0.005 % by weight to 0.1 % by weight.

4. Preserved fruit according to one of Claims 1 to 3, wherein the fruit is in a container made of metal, glass or plastic.

5. Preserved fruit according to one of Claims 1 to 4, wherein the fruit is selected from one or more fruit varieties from the group consisting of pome fruit, stone fruit, berry fruit, tropical fruits, citrus fruits or wild fruits, for example pineapple, apple, pear, peach, mandarin or cherries.

6. Process for sweetening preserved fruits, **characterized in that** a sweetener mixture consisting of acesulfame-K and sucralose in the weight ratio ≥ 75/25 to 95/5 is used.

7. Process for reducing the sugar content in preserved fruits, **characterized in that** a portion of the sugar or all of the sugar which is added to the preserved fruit is replaced by a sweetener mixture consisting of acesulfame-K and sucralose in the weight ratio ≥ 75/25 to 95/5.

8. Use of a sweetener mixture consisting of acesulfame-K and sucralose in the weight ratio ≥ 75/25 to 95/5 for sweetening preserved fruits.

## Revendications

1. Conserve de fruits, contenant des fruits et un mélange d'édulcorants constitué d'acésulfame K et de sucralose dans un rapport pondéral ≥ 75/25 jusqu'à 95/5.

2. Conserve de fruits selon la revendication 1 qui contient en outre un ou plusieurs des édulcorants suivants : cyclamate, saccharine et NHDC.

3. Conserve de fruits selon la revendication 1 ou 2, la proportion en quantité du mélange d'édulcorants par rapport à la pesée de la totalité de la conserve de fruits étant de 0,005% en poids à 0,1% en poids.

4. Conserve de fruits selon l'une quelconque des revendications 1 à 3, les fruits se trouvant dans un conteneur en métal, en verre ou en matériau synthétique.

5. Conserve de fruits selon l'une quelconque des revendications 1 à 4, les fruits étant choisis parmi un ou plusieurs types de fruits du groupe formé par les fruits à pépin, les fruits à noyau, les baies, les fruits tropicaux, les agrumes ou les fruits sauvages, par exemple les ananas, les pommes, les poires, les pêches, les mandarines ou les cerises.

6. Procédé pour édulcorer des conserves de fruits, **caractérisé en ce qu'**on utilise un mélange d'édulcorants constitués d'acésulfame K et de sucralose dans un rapport pondéral ≥ 75/25 jusqu'à 95/5.

7. Procédé pour réduire la teneur en sucre dans des conserves de fruits, **caractérisé en qu'**on remplace une partie du sucre ou tout le sucre qui est ajouté à la conserve de fruits par un mélange d'édulcorants constitué d'acésulfame K et de sucralose dans un rapport pondéral ≥ 75/25 jusqu'à 95/5.

8. Utilisation d'un mélange d'édulcorants constitué d'acésulfame K et de sucralose dans un rapport pondéral ≥ 75/25 jusqu'à 95/5 pour l'édulcoration de conserves de fruits.
